# FASCICULE DE BREVET EUROPEEN

(11) **EP 3 143 291 B1**
(45) Date de publication et mention de la délivrance du brevet: **17.02.2021**
(21) Numéro de dépôt: 15729572.6
(22) Date de dépôt: 13.05.2015
(51) Int. Cl.: F16B 7/04

(54) **DISPOSITIF DE CONNEXION POUR ÉLÉMENTS TUBULAIRES**
VERBINDUNGSVORRICHTUNG FÜR ROHRFÖRMIGE ELEMENTE
CONNECTION DEVICE FOR TUBULAR ELEMENTS

(30) Priorité: 15.05.2014 CH 737142014
(43) Date de publication de la demande: 22.03.2017
(73) Titulaire: Peverada, Lino, 1740 Neyruz (CH)
(72) Inventeur: Peverada, Lino, 1740 Neyruz (CH)
(74) Mandataire: Micheli & Cie SA
(86) Numéro de dépôt international: PCT/IB2015/053524
(87) Numéro de publication internationale: WO 2015/173746

(56) Documents cités:
- CH-A5- 560 850
- DE-U1- 20 303 508
- FR-A- 1 562 522
- GB-A- 2 256 464
- US-A- 2 290 430
- US-A- 4 657 426

## Description

L'invention se rapporte au domaine des structures tubulaires, aussi bien permanentes que démontables, tels des échafaudages, des encadrements de panneaux, des ossatures de meubles de bureau ou d'établis divers. L'invention a plus particulièrement pour objet un dispositif de connexion par voie interne pour éléments tubulaires utilisés, par exemple, dans le contexte ci-dessus.

### Etat de la technique / Enoncé du problème

L'utilisateur tout comme le monteur de structures tubulaires diverses dispose déjà de bon nombre de systèmes de connexion. L'assemblage de tubes s'effectue le plus généralement par connexion linéaire (connexion coaxiale) ou au moyen de pièces d'angle (connexion plane) ou de pièces de coin (connexion tridimensionnelle) ; la soudure n'est pas prise en compte ici car pratiquement irréversible.

L'assemblage par connexion des éléments tubulaires peut se faire au moyen de dispositifs de connexion externes tels que brides ou anneaux ou clips par exemple. On utilise aussi une combinaison de type mâle/femelle à vis, à ressort, à bille par exemple, celles-ci nécessitant un alors usinage particulier de chacune des extrémités à connecter. Lorsque la connexion souhaitée doit être réversible, la séparation des éléments tubulaires de type mâle/femelle est souvent malaisée et source d'usure, de cassure ou distorsion.

L'assemblage d'éléments tubulaires par voie interne dérive du concept mâle/femelle évoqué ci-dessus : il est souvent requis pour des raisons esthétiques (mobilier de bureau ou mobilier industriel par exemple) mais également pour des raisons de sécurité (échafaudages par exemple) et il convient alors de supprimer toute aspérité potentiellement dangereuse. L'invention propose un dispositif de connexion pour éléments tubulaires par voie interne particulièrement simple et sûr à utiliser: il se compose d'un petit nombre de pièces constitutives, ces dernières étant en outre faciles à façonner et disponibles dans une gamme de variantes (dimensions, matière, forme, configuration, etc.) des plus étendue. L'invention permet ainsi de réaliser à bon compte les assemblages les plus complexes, tout en tenant compte de toutes les contraintes mécaniques rencontrées dans ce contexte. Des dispositifs de connexion similaires sont connus dans les documents GB2256464 A et CH560850, par example.

### Résumé de l'invention

L'invention a premièrement pour objet un ensemble de deux éléments profilés comportant chacun une arête médiane et deux arêtes longitudinales, assemblés par leur arête médiane respective maintenues chacune mobile en écartement l'une par rapport à l'autre sur une course limitée; un orifice cylindrique, au moins, traversant perpendiculairement l'une des arêtes médiane et un seul élément cylindrique ajusté en dimensions à l'orifice cylindrique vient buter sur l'arête médiane opposée de sorte que l'écartement desdites arêtes médianes fasse buter les arêtes longitudinales desdits éléments profilés contre la paroi interne de l'élément tabulaire.

L'invention a également pour objet un kit de connexion pour éléments tubulaires ainsi qu'une structure tubulaire, réversible ou permanente, assemblée au moyen de dispositifs de connexion selon l'invention. L'invention est définie au moyen des revendications 1 à 15.

### Dessins

Fig. 1 est une vue en coupe du dispositif de connexion engagé dans un élément tubulaire de section cylindrique;
Fig. 2 est une vue en perspective du dispositif de Fig. 1 engagé en partie seulement dans l'élément tubulaire correspondant;
Fig.3 est une vue en perspective du dispositif de Fig. 1 montrant deux élément tubulaires cylindriques connectés au moyen du dispositif selon l'invention ;
Fig.4 est une vue en coupe du dispositif de connexion engagé dans un élément tubulaire de section carrée;
Fig. 5 est une vue en perspective du dispositif de Fig. 4 engage en partie seulement dans l'élément tubulaire correspondant;
Fig. 6 est une vue en coupe du dispositif de connexion engagé dans un élément tubulaire de section hexagonale;
Fig. 7 est une vue en perspective du dispositif de Fig. 6 engagé en partie seulement dans l'élément tubulaire correspondant :
Fig. 8 illustre la mise en place d'un élément de friction compressible avant engagement du dispositif de connexion dans l'élément tubulaire correspondant ;
Fig. 9 illustre ta mise en place d'un élément de friction compressible après engagement du dispositif de connexion dans l'élément tubulaire correspondant.

### Description détaillée de l'invention

Au titre de premier objet de l'invention. on entend définir un dispositif de connexion 1 pour éléments tabulaires 10a, 10a'. 10b. 10e, etc. comprenant :
- un ensemble de deux éléments profilés 2a et 2b comportant chacun une arête médiane 3a, 3b et deux arêtes longitudinales 4a, 4b respectivement 5a, 5b ;
- lesdits premier et second éléments profilés 2a, 2b étant assemblés par leur arête médiane respective 3a et 3b, ces dernières étant maintenues mobiles en écartement l'une par rapport à l'autre sur une course limitée C;
- le premier élément profilé 2a comportant au moins un orifice cylindrique 6 traversant perpendiculairement ladite arête longitudinale médiane 3a;
- un seul élément cylindrique 7, ajusté en dimensions à l'orifice cylindrique 6 et venant buter sur l'arête médiane 3b du second élément profilé 2b ; et dans lequel la portion d'élément cylindrique 7 dépassant de l'arête médiane 3a du premier élément profilé 2a et butant sur l'arête médiane 3b du second élément profilé 2b définit un écartement spatial desdits premier et second éléments profilés 2a, 2b tel que les arêtes longitudinales 4a, 5a respectivement 4b, 5b viennent buter contre la paroi interne 8 de l'élément tubulaire 10a. 10a', 10b, 10c, etc.

A la lecture de ce qui précède, on réalise que l'une des particularités du dispositif de l'invention consiste à opérer la connexion des éléments tubulaires 10a. 10a', 10b, 10c. etc... par l'intérieur ou, exprime autrement par la voie interne, l'écartement des éléments profilés 2a et 2b pouvant être ajusté de façon telle que la pression ou le frottement requis pour la fixation optimale des éléments ainsi connectés s'exerce uniquement sur la paroi interne 8 desdits éléments tubulaires 10a. 10a'. 10b, 10c. etc.... Un tel type de connexion a l'avantage de ne laisser pratiquement aucune, sinon absolument aucune aspérité dépassant de la surface externe desdits éléments tubulaires.

Par élément profilé 2a. respectivement 2b, on entend un profilé aussi bien coudé (angulaire), courbé (p. ex. parabolique) ou semi-cylindrique. De telles configurations sont réalisables au moyen de techniques usuelles à partir du matériau choisi, comme l'étampage d'une tôle métallique telle une tôle d'acier, d'acier INOX, d'aluminium ou de tout autre métal possédant les propriétés mécaniques requises ; l'extrusion de matériaux composites non métalliques tels des polymères par exemple est également possible selon les cas envisagés (contraintes mécaniques ou poids de l'ensemble à réaliser).

Chacun des éléments profilés 2a et 2b se caractérise par une arête ou tangente médiane 3a, respectivement 3b et deux arêtes longitudinales ou bords 4a et 5a, respectivement 4b et 5b. par sa longueur, par la hauteur H de chacune des portions latérales concernées et plus particulièrement par l'angle interne s'ouvrant de l'arête médiane sur l'extérieur (l'angle interne de l'élément 2b est référencé α dans les figures, alors que l'angle interne de l'élément 2a n'est pas référencé).

Les dimensions des portions décrites ci-dessus peuvent varier d'un élément à l'autre; par exemple, selon la configuration choisie, l'angle interne de l'élément 2a est identique à l'angle interne α de l'élément 2b ou différent de ce dernier. Selon l'invention, l'angle α est généralement compris entre 30 et 150°, plus particulièrement entre 60 et 120°, un angle α de 90°, représentant l'une des variantes préférentielles proposées dans le contexte de l'invention.

S'agissant d'éléments profilés coudés, la notion d'angle α coule de source et il en va de même pour l'expression « arête ». La notion d'angle se comprend également avec extension aux éléments profilés courbés convexes ou semi-cylindriques : dans ce cas-ci, le terme « tangente » est plus approprié que « arête médiane ».

De même. la longueur de chacune des arêtes médianes 3a et 3b ou celle des arêtes longitudinales 4a, 5a, 4b, 5b est identique ou celle-ci varie par paire ou même individuellement: de telles variations de longueur sont sans influence déterminante sur l'efficacité de la connexion réalisée; l'homme du métier est en mesure de choisir ce qui convient à chaque situation.

La hauteur H de chacune des arêtes longitudinales 4a, 5a, 4b et 5b peut également varier indépendamment de chacune des portions (flans, flasques ou côtés) considérées et les branches latérales de chaque élément 2a et 2b peuvent varier en hauteur par paire. De telles configurations se retrouvent par exemple lors de l'assemblage d'éléments tabulaires pluri angulaires, de section aussi bien carrée, rectangulaire, en losange, trapézoïdale, hexagonale voire octogonale par exemple ; ladite section peut être encore circulaire, ovale ou elliptique par exemple. Ces éléments tubulaires sont en fait ceux du commerce.

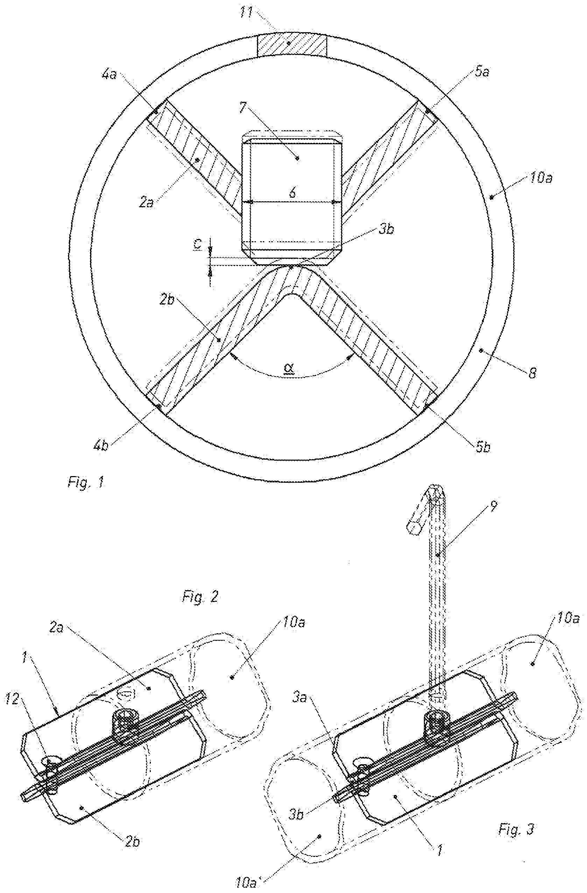

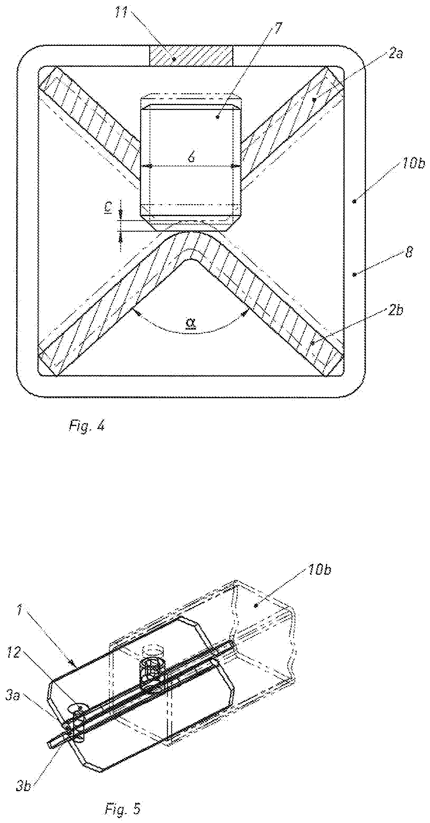

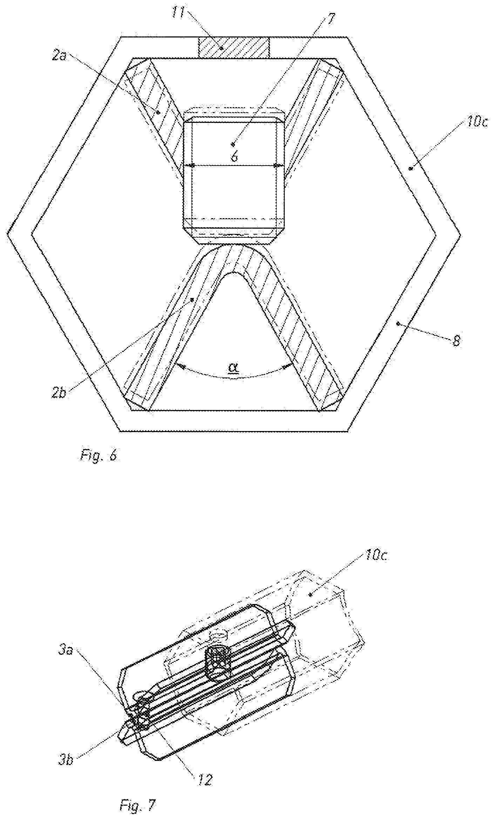

Les configurations dans lesquelles la hauteur H évoquée ci-dessus est identique pour chacune des portions latérales de 2a comme de 2b et dans lesquelles les angles internes des éléments 2a et 2b sont également identiques sont notamment illustrées dans les Fig. 1 à 7. Vus en coupe, les éléments 2a et 2b sont donc identiques, leur assemblage est symétrique tant avant qu'après connexion des éléments tubulaires 10a et 10a' ; ou 10b ou 10c, et la répartition des efforts contre la paroi interne 8 desdits éléments tubulaires est également symétrique. Ceci représente de loin la configuration la plus favorable sur le plan mécanique.

Selon l'invention, l'arête médiane 3a de l'élément 2a comporte au moins un orifice cylindrique 6 la traversant perpendiculairement et disposé au centre ou non de ladite arête médiane ; un seul élément cylindrique 7 est ajusté en dimensions à l'orifice cylindrique 6, c'est-à-dire en diamètre comme en longueur pour venir buter le moment venu sur l'arête longitudinale médiane 3b de l'élément 2b, de manière à écarter les éléments 2a et 2b l'un de l'autre. L'élément cylindrique 7 peut être un élément cylindrique telle une goupille, une cheville ou, de préférence, un élément cylindrique fileté telle une vis ou un boulon, notamment une vis à tête fendue, une vis à tête cruciforme, une vis à tête cylindrique à six pans creux, à tête fraisée ou non; évidement, l'orifice cylindrique 6 est alors fileté. Il appartient à l'homme du métier de choisir l'outillage convenant le mieux.

Selon la configuration ou l'assemblage souhaité ou encore selon les contraintes mécaniques à maîtriser, l'élément 2a de l'ensemble 1 peut comprendre plusieurs orifices 6 disposés sur l'arête 3a à intervalles réguliers ou non.

Un orifice 11 est formé dans la paroi d'un, au moins, des deux éléments tubulaires qu'il convient d'assembler au moyen du dispositif de connexion de l'invention. L'orifice 11 est aménagé proche de l'extrémité (portion terminale) de l'élément tubulaire. L'orifice 11 est dimensionné de sorte à permettre le fonctionnement de l'outil 9 venant actionner l'élément 7, une vis 7 par exemple (Fig. 3) ; dans ce dernier cas on utilise un tournevis classique, un tournevis cruciforme ou une clé de section hexagonale ou une clé dite « imbus ». L'orifice 11 peut être une simple perforation circulaire ménagée à l'endroit requis ou une ouverture longitudinale 11 permettant un réglage fin du positionnement relatif de l'ensemble 1 de l'élément tubulaire correspondant.

Selon l'invention, les éléments profilés 2a et 2b sont assemblés par l'une au moins de leurs extrémités respectives au moyen d'une pièce d'accouplement 12 configurée de sorte à ménager une course limitée C définissant l'écartement maximum des arêtes médianes 3a et 3b. Cette pièce d'accouplement peut être une boucle, une goupille un boulon avec son écrou ou un rivet par exemple, toutes pièces qui, passant au travers de l'arête médiane 3a et 3b, sont alors dimensionnées de sorte à limiter la course C. S'agissant d'un boulon et de son écrou, ce dernier peut être bloqué en un point donné ; s'agissant d'un rivet téte et pointe écrasée font aisément l'affaire. Dans la configuration la plus simple, les éléments 2a et 2b sont libres en rotation plane sans restriction : lorsque l'accouplement des éléments 2a et 2b est réalisé sur chacune des extrémités des arêtes médianes 3a et 3b, seul l'écartement contrôlé de ces dernières est possible.

L'écartement maximum C évoqué ci-dessus est relatif et variera en fonction de la dimension (p. ex. diamètre) des éléments tubulaires à connecter et de celles choisies pour les éléments 2a et 2b. L'écartement C est le plus généralement à peine plus élevé que l'écartement requis pour l'immobilisation de l'ensemble 1 au sein de l'élément tubulaire 10a, 10a', 10b, 10c. etc..., c'est à dire pour que les éléments 2a et 2b viennent se plaquer contre la paroi 8 sous l'effet de l'écartement des arêtes médianes 3a et 3b. On demeure de toutes façons dans l'ordre du mm et il appartient à l'homme du métier de choisir la configuration convenant le mieux.

Le dispositif comprend en outre, à titre optionnel, un élément élastique compressible 13 de hauteur (ou diamètre) maximum H1 supérieure à la hauteur H2 d'un « triangle » dont le sommet coïncide avec l'arête médiane 3a de l'élément 2a et dont la base est définie par la paroi interne 8 de l'élément tubulaire. L'élément élastique est destiné à être inséré dans l'angle interne de l'élément profilé 2a.

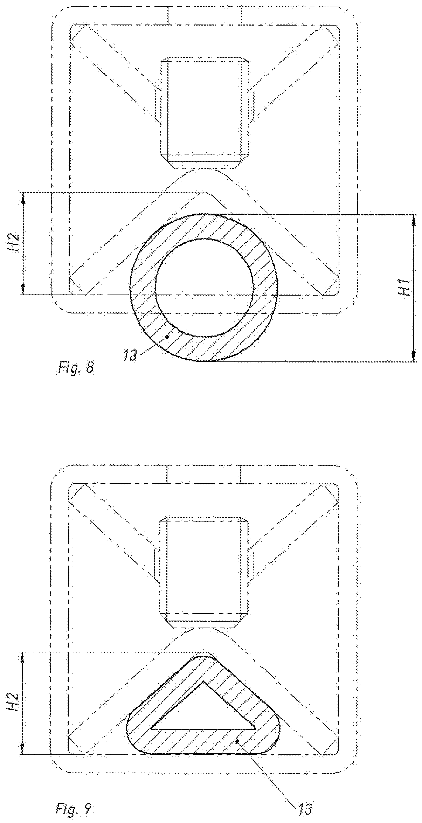

De manière équivalente, l'élément compressible 13 peut être défini par sa hauteur (ou son diamètre) maximum H1 supérieure à la hauteur H2 d'un « triangle » dont le sommet coïncide avec l'arête médiane 3b de l'élément 2b et dont la base est définie par la paroi interne 8 de l'élément tubulaire; l'élément élastique étant alors destiné à être inséré dans l'angle α de l'élément profilé 2b. Cette configuration est illustrée par les Fig. 8 et Fig. 9.

L'élément 13 est constitué de toute matière compressible élastique tel le bois, le liège, le cuir, le caoutchouc, une mousse de polymère élastique, un polymère suffisamment élastique. Cet élément est aussi bien creux (Fig. 8 et Fig, 9) que plein. 11 sert de frein, autrement dit de moyen de friction, lors de l'introduction puis de la mise en place ou ajustage de l'ensemble 1 dans la portion terminale de l'élément tubulaire correspondant.

L'assemblage de deux éléments tubulaires 10a et 10a', au moyen du dispositif de l'invention. est succinctement décrit ci-dessous à titre d'exemple : il comprend les étapes suivantes :
a) insérer un ensemble 1, constitué des premier et second éléments profilés 2a et 2b, dans une portion terminale d'un premier élément tubulaire 10a, celle-ci étant alors pourvue d'un orifice 11 disposé à une distance prédéterminée de l'extrémité correspondante dudit tube 10a;
b) faire avancer ledit ensemble 1 sur une longueur prédéterminée de sorte à positionner le premier élément profilé 2a comportant son orifice cylindrique fileté 6 et l'élément cylindrique fileté 7 pour s'aligner sur l'axe de l'orifice 11 de la portion terminale de l'élément tubulaire 10a;
c) ce faisant on comprime progressivement l'élément 13 au fur et à mesure de son avancement dans la portion terminale susmentionnée;
d) insérer la portion de l'ensemble 1 dépassant de l'extrémité de premier élément tubulaire 10a dans la portion terminale d'un second élément tubulaire 10a', cette dernière étant pourvue ou non d'un orifice pour l'outil 9 ; et
e) actionner ledit élément cylindrique fileté 7, au travers de l'orifice 11 de la portion terminale du tube 10a jusqu'à venir buter sur l'arête médiane 3b du second élément profilé 2b, entraînant ainsi l'écartement spatial des arêtes médianes 3a et 3b, respectivement l'écartement spatial des arêtes longitudinales 4a, 5a et 4b, 5b qui viennent ainsi buter contre la paroi interne 8 des portions terminales des éléments tabulaires 10a et 10a'.

Un tel assemblage est aussi bien permanent que réversible. S'agissant de la séparation des éléments tabulaires 10a et 10a' préalablement connectés comme évoqué plus haut, on procédera simplement selon l'ordre inverse.

Les kits de connexion comprenant le dispositif selon l'invention tout comme les divers assemblages de structures tubulaires que l'on peut ainsi réaliser ne seront cependant pas décrits plus avant, tant leurs variantes sont nombreuses.

## Revendications

1. Dispositif de connexion (1) pour éléments tubulaires (10a, 10a'; 10b; 10c) comprenant :
- un ensemble de deux éléments profilés (2a et 2b) coudés ou courbés et comportant chacun une arête médiane (respectivement 3a et 3b) et deux arêtes longitudinales (respectivement 4a et 5a, 4b et 5b) ;
- lesdits premier et second éléments profilés (2a, 2b) étant assemblés par leur arête médiane (3a, 3b), au niveau de l'une au moins de leurs extrémités respectives, au moyen d'une pièce d'accouplement (12) passant au travers des arêtes médianes du premier et du second élément profilé et configurée de sorte à maintenir les arrêtes médianes mobiles en écartement l'une par rapport à l'autre sur une course limitée (C) définissant l'écartement maximum des arrêtes médianes;
- le premier élément profilé (2a) comportant un orifice cylindrique (6) traversant perpendiculairement ladite arête médiane (3a) ;
- un seul élément cylindrique (7), ajusté en dimensions à l'orifice cylindrique (6) et agencé pour dépasser de l'arrête médiane (3a) et pour venir buter sur l'arête médiane (3b) du second élément profilé (2b) ; et dans lequel
- la portion de le seul élément cylindrique (7) dépassant de l'arête médiane (3a) du premier élément profilé (2a) et butant sur l'arête médiane (3b) du second élément profilé (2b) définit un écartement spatial desdits premier et second éléments profilés (2a, 2b) tel que les arêtes longitudinales (4a, 5a, 4b, 5b) viennent buter contre la paroi interne (8) de l'élément tubulaire (10a, 10a', 10b, 10c).

2. Dispositif selon la revendication 1 dans lequel les éléments profilés (2a, 2b) sont de longueur identique.

3. Dispositif selon la revendication 1 ou 2, dans lequel les arêtes longitudinales (4a et 5a, 4b et 5b) desdits éléments profilés sont de hauteur identique.

4. Dispositif selon l'une des revendications 1, 2 et 3, dans lequel l'angle interne (α) de chacun desdits éléments profilés coudés (2a, 2b) est compris entre 60 et 120°.

5. Dispositif selon l'une des revendications précédentes dans lequel l'angle interne du premier élément profilé coudé (2a) est identique à l'angle interne (α) du second élément profilé coudé (2b).

6. Dispositif selon l'une des revendications précédentes dans lequel l'angle interne (α) de chacun desdits éléments profilés coudés (2a, 2b) est de 90°.

7. Dispositif selon l'une des revendications précédentes dans lequel l'orifice (6) est disposé au centre de l'arête médiane (3a) de l'élément profilé (2a).

8. Dispositif selon l'une des revendications précédentes dans lequel l'orifice cylindrique (6) est un orifice fileté et le seul élément cylindrique (7) est un élément cylindrique fileté telle une vis ou un boulon;

9. Dispositif selon la revendication 8, dans lequel la longueur axiale de l'élément cylindrique fileté (7) est suffisamment petite pour qu'il soit possible d'insérer le dispositif de connexion (1) dans une portion terminale d'un élément tubulaire (10a, 10a' ; 10b; 10c) avec l'élément cylindrique fileté (7) préalablement engagé dans l'orifice cylindrique fileté (6) du premier élément profilé (2a), et qu'il soit possible ensuite de faire avancer le dispositif de connexion (1), de façon à faire se déplacer l'élément cylindrique fileté (7) à l'intérieure de la portion terminale de l'élément tubulaire (10a; 10b; 10c).

10. Dispositif selon l'une des revendications précédentes comprenant un élément élastique compressible (13) de hauteur maximum (H1) supérieure à la hauteur (H2) d'un triangle dont le sommet coïncide avec l'une des deux arêtes médianes (3a, 3b) et dont la base est définie par la paroi interne (8) entre l'extrémité des arêtes longitudinales (4a et 5a, ou 4b et 5b) de l'élément profilé correspondant (2a, 2b), l'élément élastique compressible étant inséré dans l'angle intérieure de l'élément profilé (2a), alternativement dans l'angle (α) de l'élément profilé (2b).

11. Dispositif selon l'une des revendications précédentes dans lequel la connexion des éléments tubulaires (10a, 10a', 10b, 10c) est réversible.

12. Kit de connexion pour éléments tubulaires (10a, 10a', 10b, 10c) comprenant une pluralité des dispositifs de connexion (1) tels que définis à la revendication 1, un moyen (9) permettant d'actionner lesdits éléments cylindriques (7) au travers d'un orifice (11) ménagé dans une des portions terminales des éléments tubulaires à connecter (10a, 10a', 10b, 10c) et, le cas échéant, un ensemble d'éléments élastiques compressibles (13) tels que définis à la revendication 10.

13. Structure tubulaire comprenant un assemblage d'au moins un premier élément tubulaire (10a, 10b, 10c) avec un deuxième élément tubulaire (10a'), une portion terminale du premier élément tubulaire et une portion terminale du deuxième élément tubulaire étant connectées ensemble au moyen d'un dispositif de connexion (1) selon l'une des revendications 1 à 11 ; **caractérisé en ce :**
- **qu'**un orifice (11) est formé dans la paroi de la portion terminale du premier élément tubulaire (10a, 10b, 10c), le dispositif de connexion (1) étant agencé pour être inséré dans le premier élément tubulaire de manière à ce que le seul élément cylindrique (7) et l'orifice cylindrique (6) du premier élément profilé (2a) soient positionnés en regard de l'orifice (11) formé dans la paroi de la portion terminale du premier élément tubulaire ;
- **qu'**une portion du dispositif de connexion (1) dépassant de la portion terminale du premier élément tubulaire (10a, 10b, 10c) est insérée dans le deuxième élément tubulaire (10a');
- **que** l'élément cylindrique (7) est agencé pour maintenir les éléments profilés (2a, 2b) écartés l'un de l'autre de sorte que les arêtes longitudinales (4a, 5a, 4b, 5b) soient maintenues plaquées contre la paroi interne (8) du premier élément tubulaire (10a, 10b, 10c) et contre la paroi interne (8) du deuxième élément tubulaire (10a'), le premier et le deuxième élément tubulaire étant ainsi fixés l'un à l'autre.

14. Structure tubulaire selon la revendication 13, **caractérisée en ce qu'**elle est démontable.

15. Procédé pour assembler un premier élément tubulaire (10a, 10b, 10c) avec un deuxième élément tubulaire (10a')dans le cadre du montage d'une structure tubulaire selon la revendication 13 ou 14, le procédé comportant les étapes de :
- insérer un dispositif de connexion (1) conforme à la revendication 9 dans la portion terminale du premier élément tubulaire (10a, 10b, 10c), la paroi de la portion terminale du premier élément tubulaire étant pourvue d'un orifice (11) disposé à une distance prédéterminée de l'extrémité du premier élément tubulaire ;
- faire avancer le dispositif de connexion (1) sur une longueur prédéterminée de sorte à positionner l'élément cylindrique (7) et l'orifice cylindrique (6) du premier élément profilé (2a) en regard de l'orifice (11) de la portion terminale du premier élément tubulaire ; une portion du dispositif d'accouplement (1) comprenant la pièce d'accouplement (12) dépassant alors de l'extrémités du premier élément tubulaire (10a)
- insérer la portion du dispositif de connexion (1) dépassant de l'extrémité de premier élément tubulaire (10a) dans la portion terminale d'un second élément tubulaire (10a') ; et
- actionner l'élément cylindrique (7), au travers de l'orifice (11) de la portion terminale du premier élément tubulaire jusqu'à venir buter sur l'arête médiane (3b) du second élément profilé (2b), entraînant ainsi l'écartement spatial des arêtes médianes (3a, 3b), respectivement l'écartement spatial des arêtes longitudinales (4a, 5a et 4b, 5b) qui viennent ainsi buter contre la paroi interne (8) des portions terminales du premier et du second élément tubulaires.

## Patentansprüche

1. Verbindungsvorrichtung (1) für rohrförmige Elemente (10a, 10a'; 10b; 10c), die umfasst:
- eine Baugruppe aus zwei gekrümmten oder gebogenen Profilelementen (2a und 2b), die jeweils eine Mittelkante (3a beziehungsweise 3b) und zwei Längskanten (4a und 5a beziehungsweise 4b und 5b) umfassen;
- wobei das erste und das zweite Profilelement (2a, 2b) über ihre Mittelkante (3a, 3b) im Bereich von mindestens einem ihrer jeweiligen Enden mittels eines Kopplungsteils (12) zusammengebaut sind, das die Mittelkanten des ersten und des zweiten Profilelements durchquert und derart ausgestaltet ist, dass es die Mittelkanten beweglich hält, indem es sie über eine begrenzte Weglänge (C), die den Höchstabstand der Mittelkanten definiert, in Abstand zueinander hält;
- wobei das erste Profilelement (2a) eine zylindrische Öffnung (6) umfasst, die die Mittelkante (3a) senkrecht durchquert;
- ein einziges zylindrisches Element (7), dessen Abmessungen an die zylindrische Öffnung (6) angepasst sind und das so gestaltet ist, dass es über die Mittelkante (3a) übersteht und an die Mittelkante (3b) des zweiten Profilelements (2b) anschlägt; und wobei
- der Abschnitt des einzigen zylindrischen Elements (7), der von der Mittelkante (3a) des ersten Profilelements (2a) übersteht und an der Mittelkante (3b) des zweiten Profilelements (2b) anschlägt, einen räumlichen Abstand zwischen dem ersten und dem zweiten Profilelement (2a, 2b) definiert, derart dass die Längskanten (4a, 5a, 4b, 5b) gegen die Innenwand (8) des rohrförmigen Elements (10a, 10a', 10b, 10c) anschlagen.

2. Vorrichtung nach Anspruch 1, wobei die Profilelemente (2a, 2b) identische Längen aufweisen.

3. Vorrichtung nach Anspruch 1 oder 2, wobei die Längskanten (4a und 5a, 4b und 5b) der Profilelemente identische Höhen aufweisen.

4. Vorrichtung nach einem der Ansprüche 1, 2 und 3, wobei der Innenwinkel (α) von jedem der gekrümmten Profilelemente (2a, 2b) zwischen 60 und 120° beträgt.

5. Vorrichtung nach einem der vorhergehenden Ansprüche, wobei der Innenwinkel des ersten gekrümmten Profilelements (2a) identisch mit dem Innenwinkel (α) des zweiten gekrümmten Profilelements (2b) ist

6. Vorrichtung nach einem der vorhergehenden Ansprüche, wobei der Innenwinkel (α) von jedem der gekrümmten Profilelemente (2a, 2b) 90° beträgt.

7. Vorrichtung nach einem der vorhergehenden Ansprüche, wobei die Öffnung (6) in der Mitte der Mittelkante (3a) des Profilelements (2a) angeordnet ist.

8. Vorrichtung nach einem der vorhergehenden Ansprüche, wobei die zylindrische Öffnung (6) eine Gewindeöffnung ist und das einzige zylindrische Element (7) ein zylindrisches Gewindeelement, wie beispielsweise eine Schraube oder ein Bolzen, ist.

9. Vorrichtung nach Anspruch 8, wobei die axiale Länge des zylindrischen Gewindeelements (7) klein genug ist, damit es möglich ist, die Verbindungsvorrichtung (1) in einen Endabschnitt eines rohrförmigen Elements (10a, 10a'; 10b; 10c) mit dem vorhergehend in der zylindrischen Gewindeöffnung (6) des ersten Profilelements (2a) in Eingriff gebrachten zylindrischen Gewindeelement (7) einzusetzen, und damit es dann möglich ist, die Verbindungsvorrichtung (1) vorzuschieben, derart, dass bewirkt wird, dass das zylindrische Gewindeelement (7) sich im Inneren des Endabschnitts des rohrförmigen Elements (10a; 10b; 10c) verlagert.

10. Vorrichtung nach einem der vorhergehenden Ansprüche, die ein zusammendrückbares elastisches Element (13) mit einer Maximalhöhe (H1) umfasst, die größer als die Höhe (H2) eines Dreiecks ist, dessen Spitze mit einer von den zwei Mittelkanten (3a, 3b) zusammenfällt und dessen Basis durch die Innenwand (8) zwischen dem Ende der Längskanten (4a und 5a oder 4b und 5b) des entsprechenden Profilelements (2a, 2b) definiert ist, wobei das zusammendrückbare elastische Element in den Innenwinkel des Profilelements (2a), alternativ in den Winkel (α) des Profilelements (2b), eingesetzt ist.

11. Vorrichtung nach einem der vorhergehenden Ansprüche, wobei die Verbindung der rohrförmigen Elemente (10a, 10a', 10b, 10c) reversibel ist.

12. Verbindungssatz für rohrförmige Elemente (10a, 10a', 10b, 10c), der mehrere Verbindungsvorrichtungen (1) nach Anspruch 1, ein Mittel (9), das die Betätigung der zylindrischen Elemente (7) durch eine Öffnung (11), die in einem der Endabschnitte der zu verbindenden rohrförmigen Elemente (10a, 10a', 10b, 10c) eingerichtet ist, ermöglicht, und gegebenenfalls eine Baugruppe aus zusammendrückbaren elastischen Elementen (13) nach Anspruch 10 umfasst.

13. Rohrförmige Struktur, die eine Baugruppe aus mindestens einem ersten rohrförmigen Element (10a, 10b, 10c) mit einem zweiten rohrförmigen Element (10a')umfasst, wobei ein Endabschnitt des ersten rohrförmigen Elements und ein Endabschnitt des zweiten rohrförmigen Elements mittels einer Verbindungsvorrichtung (1) nach einem der Ansprüche 1 bis 11 miteinander verbunden sind; **dadurch gekennzeichnet, dass**:
- eine Öffnung (11) in der Wand das Endabschnitts des ersten rohrförmigen Elements (10a, 10b, 10c) gebildet ist, wobei die Verbindungsvorrichtung (1) gestaltet ist, um derart in das erste rohrförmige Element eingesetzt zu werden, dass das einzige zylindrische Element (7) und die zylindrische Öffnung (6) des ersten Profilelements (2a) der in der Wand des Endabschnitts des ersten rohrförmigen Elements gebildeten Öffnung (11) gegenüberstehend positioniert sind;
- ein Abschnitt der Verbindungsvorrichtung (1), der von dem Endabschnitt des ersten rohrförmigen Elements (10a, 10b, 10c) übersteht, in das zweite rohrförmige Element (10a')eingesetzt ist;
- das zylindrische Element (7) gestaltet ist, um die Profilelemente (2a, 2b) derart voneinander beabstandet zu halten, dass die Längskanten (4a, 5a, 4b, 5b) gegen die Innenwand (8) des ersten rohrförmigen Elements (10a, 10b, 10c) und gegen die Innenwand (8) des zweiten rohrförmigen Elements (10a')gedrückt gehalten werden, wobei das erste und das zweite rohrförmige Element so aneinander fixiert sind.

14. Rohrförmige Struktur nach Anspruch 13, **dadurch gekennzeichnet, dass** sie demontierbar ist.

15. Verfahren zum Zusammenbauen eines ersten rohrförmigen Elements (10a, 10b, 10c) mit einem zweiten rohrförmigen Element (10a')im Rahmen der Montage einer rohrförmigen Struktur nach Anspruch 13 oder 14, wobei das Verfahren die folgenden Schritte umfasst:
- Einsetzen einer Verbindungsvorrichtung (1) nach Anspruch 9 in den Endabschnitt des ersten rohrförmigen Elements (10a, 10b, 10c), wobei die Wand des Endabschnitts des ersten rohrförmigen Elements mit einer Öffnung (11) versehen ist, die in einem vorbestimmten Abstand von dem Ende des ersten rohrförmigen Elements angeordnet ist;
- Vorschieben der Verbindungsvorrichtung (1) über eine vorbestimmte Länge, derart dass das zylindrische Element (7) und die zylindrische Öffnung (6) des ersten Profilelements (2a) der Öffnung (11) des Endabschnitts des ersten rohrförmigen Elements gegenüberstehend positioniert werden; wobei ein Abschnitt der Kopplungsvorrichtung (1), die das Kopplungsteil (12) umfasst, dann von den Enden des ersten rohrförmigen Elements (10a) übersteht,
- Einsetzen des Abschnitts der Verbindungsvorrichtung (1), der von dem Ende des ersten rohrförmige Elements (10a) übersteht, in den Endabschnitt eines zweiten rohrförmigen Elements (10a'); und
- Betätigen des zylindrischen Elements (7) durch die Öffnung (11) des Endabschnitts des ersten rohrförmigen Elements, bis es gegen die Mittelkante (3b) des zweiten Profilelements (2b) anschlägt, wodurch die räumliche Trennung der Mittelkanten (3a, 3b) beziehungsweise die räumliche Trennung der Längskanten (4a, 5a und 4b, 5b) bewirkt wird, die so gegen die Innenwand (8) der Endabschnitte des ersten und des zweiten rohrförmigen Elements anschlagen.

## Claims

1. Connection device (1) for tubular elements (10a, 10a'; 10b, 10c) comprising:
- an assembly of two angled or curved profiled elements (2a, 2b) each comprising one medial edge (3a and 3b, respectively) and two longitudinal edges (4a and 5a, 4b and 5b, respectively);
- said first and second profiled elements (2a, 2b) being joined together by their medial edges (3a, 3b), at at least one of their respective ends, by means of a connecting part (12) passing through the medial edges of both the first and second profiled elements and configured so as to keep the median edges movably spaced apart from one another along a limited travel (C) defining the maximum distance between the medial edges;
- the first profiled element (2a) comprising one cylindrical orifice (6) passing perpendicularly through said medial edge (3a);
- a single cylindrical element (7), having dimensions that match the cylindrical orifice (6) and arranged so as to extend beyond the medial edge (3a) and abut against the medial edge (3b) of the second profiled element (2b); and in which
- the portion of the single cylindrical element (7) protruding from the medial edge (3a) of the first profiled element (2a) and abutting on the medial edge (3b) of the second profiled element (2b) defines a spatial distance between first and second profiled elements (2a, 2b) such that the longitudinal edges (4a, 5a, 4b, 5b) abut against the internal wall (8) of the tubular element (10a, 10a', 10b, 10c).

2. The device according to claim 1 wherein the profiled elements (2a, 2b) are of identical length.

3. The device according to claim 1 or 2, wherein the longitudinal edges (4a and 5a, 4b and 5b) of said profiled elements are of identical height.

4. The device according to one of claims 1, 2 and 3, wherein the internal angle (α) of each of said angled profiled elements (2a, 2b) is between 60 and 120°.

5. The device according to one of the preceding claims, wherein the internal angle of the first angled profiled element (2a) is identical to the internal angle (α) of the second angled profiled element (2b).

6. The device according to one of the preceding claims, wherein the internal angle (α) of each of said angled profiled elements (2a, 2b) is 90°.

7. The device according to one of the preceding claims, wherein the orifice (6) is arranged in the center of the medial edge (3a) of the profiled element (2a).

8. The device according to one of the preceding claims, wherein the cylindrical orifice (6) is a threaded orifice and the single cylindrical element (7) is a threaded cylindrical element such as a screw or a bolt.

9. The device according to claim 8, wherein the axial length of the threaded cylindrical element (7) is sufficiently small to allow inserting the connection device (1) into a terminal portion of a tubular element (10a, 10a', 10b, 10c), the threaded cylindrical element (7) having been engaged beforehand in the threaded cylindrical orifice (6) of the first profiled element (2a), and then to allow moving the connection device (1) forwards, so as to cause the threaded cylindrical element (7) to move inside the terminal portion of a tubular element (10a, 10b, 10c).

10. The device according to one of the preceding claims, comprising a compressible resilient element (13) with a maximum height (H1) greater than the height (H2) of a triangle whose apex coincides with one of the two medial edges (3a, 3b) and whose base is defined by the internal wall (8) between the end of the longitudinal edges (4a and 5a, 4b and 5b) of the corresponding profiled element (2a,2b), the compressible resilient element being inserted in the internal angle of the profiled element (2a), or alternatively in the angle (α) of the profiled element (2b).

11. The device according to one of the preceding claims, wherein the connection of the tubular elements (10a, 10a', 10b, 10c) is reversible.

12. A connection kit for tubular elements (10a, 10a', 10b, 10c) comprising a plurality of connection devices (1) as defined in claim 1, a means (9) enabling said cylindrical elements (7) to be acted upon through an orifice (11) made in one of the terminal portions of the tubular elements (10a, 10a', 10b, 10c) to be connected and, if appropriate, a set of compressible resilient elements (13) as defined in claim 10.

13. A tubular structure comprising an assembly of at least a first tubular element (10a, 10b, 10c) and a second tubular element (10a'), a terminal portion of the first tubular element and a terminal portion of the second tubular element being connected together by a connection device according to one of claims 1 to 11;
**characterized in that**:
- an orifice (11) is formed in the wall of the terminal portion of the first tubular element (10a, 10b, 10c), the connection device (1) being arranged to be inserted into the first tubular element so that the single cylindrical element (7) and the cylindrical orifice (6) of the first profiled element (2a) are positioned opposite the orifice (11) formed in the wall of the terminal portion of the first tubular element;
- a portion of the connection device (1) protruding from the terminal portion of the first tubular element (10a, 10b, 10c) is inserted into the second tubular element (10a'); and
- the cylindrical element (7) is arranged such as to keep the profiled elements (2a, 2b) spaced apart from one another so that the longitudinal edges (4a, 5a, 4b, 5b) are held flat against the internal wall (8) of the first tubular element (10a, 10b, 10c) and against the internal wall (8) of the second tubular element (10a'), the first and second tubular elements being thus connected to each other.

14. The tubular structure according to claim 13, **characterized in that** it can be disassembled.

15. A method of joining a first tubular element (10a, 10b, 10c) to a second tubular element (10a'), in the context of assembling a tubular structure according to claim 13 or 14, the method comprising the following steps:
- inserting a connection device (1) according to claim 9 into the terminal portion of the first tubular element (10a, 10b, 10c), the wall of the terminal portion of the first tubular element being provided with an orifice (11) located at a predetermined distance from the end of the first tubular element;
- moving the connection device (1) forwards along a predetermined length so as to position the cylindrical element (7) and the cylindrical orifice (6) of the first profiled element (2a) opposite the orifice (11) of the terminal portion of the first tubular element; a portion of the connection device (1) comprising the connecting part (12) then extending beyond the ends of the first tubular element (10a);
- inserting the portion of the connection device (1) protruding from the end of the first tubular element (10a) into the terminal portion of a second tubular element (10a'); and
- actuating the cylindrical element (7), through the orifice (11) of the terminal portion of the first tubular element until it abuts on the medial edge (3b) of the second profiled element (2b), thus resulting in the spatial distancing of the medial edges (3a, 3b), respectively the spatial distancing of the longitudinal edges (4a, 5a, 4b, 5b) which thus abut against the internal wall (8) of the terminal portions of the first and second tubular elements.
